# EUROPEAN PATENT SPECIFICATION

(11) **EP 0 329 250 B1**
(45) Date of publication and mention of the grant of the patent: **12.05.1993**
(21) Application number: 89200359.1
(22) Date of filing: 15.02.1989
(51) Int. Cl.: A01J 27/00

(54) **Method for fitting a banderole on the circumference of cheeses**
Verfahren zum Befestigen einer Banderole am Umfang eines Käses
Procédé pour attacher une bande le long de la circonférene d'un fromage

(30) Priority: 16.02.1988 NL 8800385
(43) Date of publication of application: 23.08.1989
(73) Proprietor: Tekon Holding B.V., NL-7521 PG Enschede (NL)
(72) Inventor: Ordelmans, Hermanus Johannes Bernardus, NL-7482 SE Haaksbergen (NL)
(74) Representative: Kraag, F., Ir.

(56) References cited:
- DE-C- 640 757
- NL-B- 180 898
- US-A- 4 108 710

## Description

The invention relates to a method for fitting a banderole on the circumference of shaped cheeses. The device for carrying out the above-mentioned method is provided with a cheese conveyor duct, having a flat conveyor belt and two longitudinal duct walls, one of which consists of a continuously driven conveyor belt, while the other is a stationary wall, and a banderole feed device with a banderole supply roll and a banderole apportioning element, in addition to means for feeding in the banderole at the cheese infeed end of the conveyor belt.

The above-mentioned method and device are known from Dutch Patent Specification 180898.

In the method and device known from the above-mentioned patent specification softer and semi-hard unmatured cheeses have a banderole or "sleeve" of strong paper, such as thick teabag paper, wound round them in order to prevent sagging and changing of shape in the maturing phase. This banderole or supporting sleeve, about 5 - 7 cm wide and being a weight of 14-28 g/m², is stuck to the cheese with a thinned potato flour solution or adhesive.

It is also known in the case of fully matured cheeses which have been provided once or more with cheese plastic then to decorate them with a narrower decorative banderole generally made of very light tissue paper or teabag paper. This decorative banderole is then placed by hand on the still wet cheese plastic, which serves as adhesive. This method, which discloses all the features of the preamble of claim 1 generally takes place in the cheese warehouses before the cheeses are despatched, is carried out for purposes of advertising and identification.

This manual decoration or printing of a cheese is relatively expensive, since it requires great manpower to place the banderoles on the cheeses, because one person can handle at the most only 100 cheeses per hour. It is also very difficult and sometimes impossible always to wind the banderole tightly and crease-free round the cheese. Moreover, after this banderoling, the cheese plastic, which then also serves as the adhesive, has to dry for some time before the final packing or paraffin-coating of the cheese can take place in the cheese warehouse.

The object of the invention is to eliminate these problems and to provide a method with which a decorative banderole can be placed on shaped cheeses automatically in a quick and effective manner.

This is achieved with a method of the type mentioned in the preamble according to the invention such that, after the ripening process of said cheeses being provided on their surface with cheese plastic, a slight moistening is used intended for the cheese plastic to soften and that the banderole is wound round the cheeses being fixed by the softened cheese plastic.

In this method according to the invention the moisture is applied directly on the cheese plastic before the banderole is wound round the cheeses or the moisture is previously applied on the banderole, being of light tissue paper or tea bag paper, before it is automatically winded around the cheeses. In fact, surprisingly it has been found that such a slight moistening of the banderole before it is winded round the cheese - or a slight moistering directly of the cheese plastic - is sufficient to soften said cheese plastic on the surface and thereby fix the banderole straight and without creases.

A great advantage with this method is that the device used for carrying out above-mentioned method, which device is usually provided with a cheese conveyor duct, having a flat conveyor belt and two longitudinal duct walls, one of which consists of a driven conveyor belt, while the other is a stationary wall, and a banderole feed device with a banderole supply roll and a banderole apportioning element, in addition to means for feeding in the banderole at the cheese infeed end of the conveyor belt, does not become soiled. Such soiling does occur otherwise to a considerable degree if there is an automatic decoration during the applying of the cheese plastic.

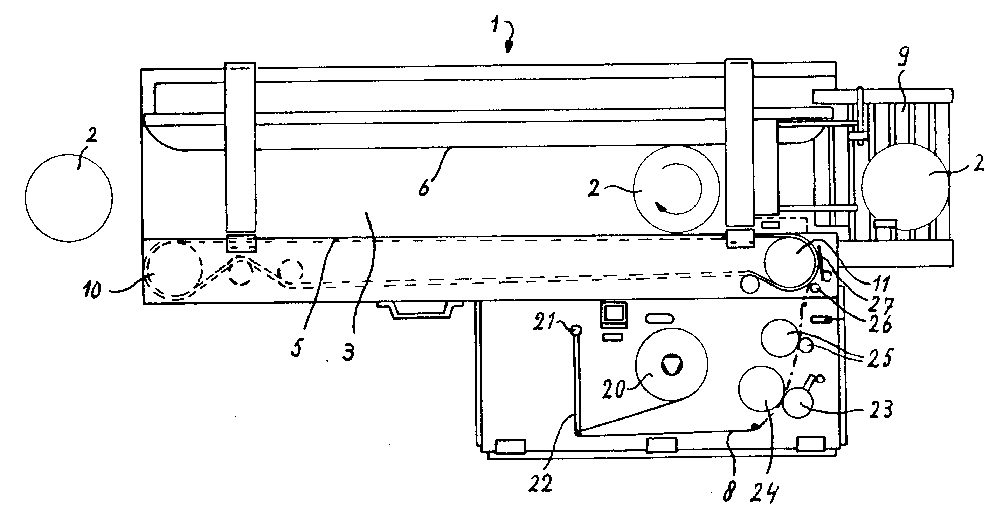

The invention will be explained in greater detail with reference to an embodiment shown in the figure.

In the figure, reference number 1 indicates a conveyor duct for cheeses 2, which are shown in a number of characteristic positions. The conveyor duct 1 is provided with a horizontal conveyor face 3 and longitudinal walls 5 and 6. The wall 6 is essentially a stationary wall, and the wall 5 is largely formed by a conveyor belt. The stationary wall 6 is connected to the frame of the device by spring means which press the wall 6 in the direction of the opposite wall. Reference number 9 indicates the infeed section on which the cheeses are fed in.

The conveyor belt 5 runs over a number of pulleys 10 and 11, one of which is driven by a motor (not shown). The banderole feed device is indicated in its entirety by 12. The banderole strip 8 is fed to the conveyor duct from a banderole supply roll 20 via a compensation arm 22, which is arranged so that it pivots about an axis 21, and via a press means with two pressure rollers 23, 24 and a perforation device 25. The banderole strip is apportioned and wound round the cheeses in a manner not shown in any further detail.

The banderole, which is decorated or printed, is of very light tissue paper or teabag paper about 10-14 g/m² in weight and about 2.5-6.0 cm in width. The matured cheeses, which have been provided with cheese plastic one or more times, are fed in via the infeed section 9. A moisture-dosing element 26 is disposed near the pulley 11 and moistens the banderole at the fastening side with a minimal quantity of moisture, for example water. Through this slight moistening of the banderole, the outer surface of the cheese plastic will become soft when the banderole is being fitted and its adhesive action will fix the banderole tightly and free from creases.

Alternatively it is also possible - preceding the winding of the banderole - to lightly moisten the cheese per se, i.e. the cheese plastic on the circumference of the cheese. This can be done for instance with a moistened sponge or soft roller. Thereby, as above, the outer surface of the cheese plastic will become soft and will fix the banderole, when wound, through its adhesive action.

In certain cases the cheeses also have to be paraffin-coated immediately after banderoling, i.e. they must be provided with a layer of paraffin in a "paraffin pot". Since moisture on the cheese under the paraffin causes staining or mould, only a minimal amount of moisture must be applied to the banderole or, alternatively, on the cheese plastic on the cheese circumference. For this purpose the moisture-dosing element, for example a sprayer or atomizer, meters very accurately, e.g. with a quantity of water of one cc per 400 m² decorative banderole. The moisture used in the dosing element can be pure water, but can also be water with a solvent, such as a fungicide.

In view of the weakness of the banderole paper used and the fact that this paper hardly absorbs any moisture, the banderole can also be supported during conveyance and when at a standstill by a supporting element 27.

By means of the above-mentioned method and device it is possible to provide a banderole quickly and automatically on, for example, cheeses with a diameter of 25 to 50 cm.

## Claims

1. Method for fitting a banderole (8) on the circumference of shaped cheeses (2), characterized in that, after the ripening process of said cheeses (2) being provided on their surface with cheese plastic, a slight moistening is used intended for the cheese plastic to soften and that the banderole (8) is wound round the cheeses (2) being fixed by the softened cheese plastic.

2. Method according to claim 1, in which the moisture is applied directly on the cheese plastic before the banderole (8) is wound round the cheeses (2).

3. Method according to claim 1, in which said winding with the banderole (8) is carried out automatically with a banderole (8) of light tissue paper or teabag paper, previously moistened.

4. Method according to claim 3, in which the cheeses (2) are paraffin-coated after the banderole (8) has been placed on them, in which the moistening of the banderole (8) is metered accurately at about one cc moisture per 400 cm² banderole.

5. Method according to one of the preceding claims, in which the above-mentioned moisture is water with a solvent such as fungicide.

## Patentansprüche

1. Verfahren zum Anbringen einer Banderole (8) am Umfang von geformten Käsen (2),
dadurch **gekennzeichnet,** daß nach dem Reifeprozeß dieser Käse (2), die an ihrer Oberfläche mit Käsekunststoff versehen werden, eine geringfügige Befeuchtung verwendet wird, um den Käsekunststoff zu erweichen, und daß die Banderole (8) um die Käse (2) gewunden und dabei durch den erweichten Käsekunststoff festgehalten wird.

2. Verfahren nach Anspruch 1, bei welchem die Feuchtigkeit direkt auf den Käsekunststoff aufgebracht wird, bevor die Banderole (8) um die Käse (2) gewunden wird.

3. Verfahren nach Anspruch 1, bei welchem das Umwinden mit der Banderole (8) automatisch mit einer Banderole (8) aus leichtem Seidenpapier oder Teebeutelpapier, die vorher angefeuchtet wurde, durchgeführt wird.

4. Verfahren nach Anspruch 3, bei welchem die Käse (2) mit Paraffin überzogen werden, nachdem die Banderole (8) an ihnen angebracht wurde, und bei welchem das Befeuchten der Banderole (8) genau auf ungefähr 1 cm³ Feuchtigkeit pro 400 cm² Banderole dosiert wird.

5. Verfahren nach einem der vorangehenden Ansprüche, bei welchem die oben genannte Feuchtigkeit Wasser mit einem Lösungsmittel wie einem Fungizid ist.

## Revendications

1. Procédé pour fixer une bande (8) le long de la circonférence de fromages formés (2), caractérisé en ce que, après le processus de mûrissement desdits fromages (2) qui ont été pourvus sur leur surface d'un plastique pour fromage, une légère humidification est utilisée dans l'intention d'amollir le plastique pour fromage et en ce que la bande (8) est enroulée autour des fromages (2) en étant fixée par le plastique pour fromage amolli.

2. Procédé selon la revendication 1, dans lequel l'humidité est appliquée directement sur le plastique pour fromage avant que la bande (8) ne soit enroulée autour des fromages (2).

3. Procédé selon la revendication 1, dans lequel ledit enroulement de la bande (8) est exécuté automatiquement avec une bande (8) de papier de soie ou papier pour sachet de thé légers, préalablement humidifiée.

4. Procédé selon la revendication 3, dans lequel les fromages (2) sont revêtus de paraffine après que la bande (8) a été disposée sur eux, dans lequel l'humidification de la bande (8) est dosée précisément à environ un cc d'humidité pour 400 cm2 de bande.

5. Procédé selon l'une quelconque des revendications précédentes, dans lequel l'humidifiant ci-dessus mentionné est de l'eau additionnée de solvant tel qu'un fongicide.
